(19) Europäisches Patentamt
European Patent Office
Office européen des brevets

(11) **EP 2 070 591 A2**

(12) **EUROPÄISCHE PATENTANMELDUNG**

(43) Veröffentlichungstag:
**17.06.2009 Patentblatt 2009/25**

(51) Int Cl.:
**B01J 8/04** (2006.01)   **C01B 3/38** (2006.01)
**C01B 3/48** (2006.01)

(21) Anmeldenummer: **09156079.7**

(22) Anmeldetag: **02.03.2005**

(84) Benannte Vertragsstaaten:
**DE FR GB IT**

(30) Priorität: **06.03.2004   DE 102004010910**

(62) Dokumentnummer(n) der früheren Anmeldung(en) nach Art. 76 EPÜ:
**05732059.0 / 1 732 658**

(71) Anmelder: **WS Reformer GmbH**
**71272 Renningen (DE)**

(72) Erfinder: **Wünning, Joachim A.**
**71229, Leonberg (DE)**

(74) Vertreter: **Rüger, Barthelt & Abel**
**Patentanwälte**
**Webergasse 3**
**73728 Esslingen (DE)**

Bemerkungen:
Diese Anmeldung ist am 24-03-2009 als Teilanmeldung zu der unter INID-Code 62 erwähnten Anmeldung eingereicht worden.

(54) **Kompaktdampfreformer**

(57)   Der neue Kompaktdampfreformer (1) umfasst in einem einzigen Gerät die Dampfreformierung von Erdgas oder anderen Brennstoffen einschließlich CO-Nachreinigung. Die kontrollierte katalytische CO-Reinigung wird durch sorgfältige Temperaturkontrolle an dem Nachreaktor (37, 39, 39a) erreicht. Die Temperaturkontrolle wird durch druckgeregelten Betrieb des Verdampfers 24 ermöglicht.

Fig. 1

EP 2 070 591 A2

## Beschreibung

Die Erfindung betrifft einen Kompaktdampfreformer und ein Verfahren zur Dampfreformierung.

Bei der Dampfreformierung von Kohlenwasserstoffen zur Erzeugung von Wasserstoff werden im Gegensatz zur autothermen Reformierung der Stoffstrom zur Gaserzeugung und der Stoffstrom zur Beheizung getrennt gehalten. Damit wird bei der Dampfreformierung die Verdünnung des Wasserstoffs mit dem Stickstoff der Verbrennungsluft vermieden.

Aus der DE 101 19 083 A1 ist ein Kompaktdampfreformer bekannt, bei dem das Prozesswasser im Wesentlichen durch das abzukühlende Reformat verdampft wird. Die Abgaswärme der Verbrennung wird durch Luftvorwärmung zurückgewonnen. NOx-Bildung wird durch Anwendung der flammenlosen Oxidation vermieden. Dieser Reformer erlaubt eine schnelle Leistungsregelung und weist einen Wirkungsgrad von bis zu etwa 80% auf.

Aus der WO 02/085781 ist ein ähnlicher Reformer bekannt, der hinsichtlich seiner Außenisolierung optimiert ist.

Diese Reformer erfüllen die in sie gesetzten Erwartungen. Es besteht jedoch der Wunsch nach weiteren Verbesserungen in Bezug auf die Vereinfachung der Prozessregelung und die Effizienz der Wärmerückgewinnung. Des Weiteren muss das Reformat möglichst weitgehend von CO-Beimengungen befreit werden. Dies muss so vollständig geschehen, dass nachgeschaltete CO-empfindliche Brennstoffzellen keinen Schaden nehmen.

Aus der EP 1 031 374 A2 ist es bekannt, das CO-haltige Prozessgas in einen so genannten CO-Oxidator zu geben, der zugleich als Reformatkühler dient. Die Kühlung wird durch Verdampfung des einströmenden Prozessgases in einem Verdampfer bewirkt.

Davon ausgehend ist es Aufgabe der Erfindung, den eingangs genannten Kompaktdampfreformer in Bezug auf die Kontrolle der Prozessführung und die Effizienz der Wärmerückgewinnung zu verbessern.

Diese Aufgabe wird mit dem Kompaktdampfreformer nach Anspruch 1 sowie mit dem Verfahren nach Anspruch 15 gelöst:

Der erfindungsgemäße Kompaktdampfreformer weist einen Reaktor auf, der von einem Brenner beheizt ist. Dem Brenner ist eine Vorwärmeinrichtung mit hoher Wärmerückgewinnung zugeordnet. Dies steigert die Effizienz des Reformierungsprozesses. Außerdem weist der Reformer einen Nach-Reaktor auf, der zur Durchführung einer Shift-Reaktion, einer Nachoxidation und/oder einer Methanisierung der im Rohreformat enthaltenen Kohlenmonoxidanteile eingerichtet ist. Der Nach-Reaktor steht mit einem Rohrverdampfer in wärmeaustauschender Verbindung, der die Temperatur des Nach-Reaktors kontrolliert auf einem festgelegten Niveau hält. Dadurch wird die gewünschte Selektivität der Nachreaktion auch bei Lastwechsel erhalten. Der Rohrverdampfer bewirkt eine Vergleichmäßigung der Temperatur in dem Nachreaktor sowohl zeitlich als auch räumlich. Der Stoffstrom in dem Rohrverdampfer bewirkt einen Wärmetransport in dem Nachreaktor, so dass sich dieser schnell an Lastwechsel anpassen kann. Dies gilt insbesondere, wenn der Rohrverdampfer und der Nachreaktor im Gleichstrom arbeiten.

Durch die Festlegung der Verdampfertemperatur wird zugleich die Temperatur des Nach-Reaktors in so engen Grenzen festgelegt, dass der CO-Gehalt auf Werte von weniger als 50 ppm abgesenkt werden kann. Eine katalytische Nachbehandlung, Filterung oder sonstige Nachbehandlung des Prozessgases wird dadurch überflüssig. Das von dem Kompaktdampfreformer erzeugte Gas kann Wasserstoffbrennstoffzellen unmittelbar zugeführt werden.

Die Temperatur des Nach-Reaktors kann auf einfachste Weise durch Regelung des Dampfdrucks erfolgen. Mit dem Dampfdruck ist zugleich die Dampferzeugertemperatur für alle Betriebszustände festgelegt. Die enge thermische Kopplung zwischen dem Nach-Reaktor und dem druckgeregelten Verdampfer z.B. durch Ausbildung des Rohrverdampfers als Rohrschlange und der Anordnung etwaiger Katalysatoren in den Rohrzwischenräumen schafft somit gute Bedingungen für die Erzeugung CO-armen Wasserstoffs.

Der Kompaktdampfreformer kann eine an den Rohrverdampfers oder einen sonstigen Verdampfer angeschlossene Strahlpumpe aufweisen, die ein Brennstoffdampfgemisch vorgegebener Zusammensetzung erzeugt und den Reaktor speist. Dies schafft die Grundlage für eine besonders einfache regelungstechnische Beherrschung des Kompaktdampfreformers. Die erzeugte Dampfmenge wird beispielsweise durch entsprechende Zumessung einer Speisewassermenge gesteuert. Die dem Reformer zur Reformierung zugeführte Brennstoffmenge muss nicht gesondert geregelt werden sondern wird von der Strahlpumpe zudosiert.

Weitere Einzelheiten vorteilhafter Ausführungsformen der Erfindung ergeben sich aus der Zeichnung, der Beschreibung oder Ansprüchen.

In der Zeichnung sind Ausführungsbeispiele der Erfindung veranschaulicht. Es zeigen:

Figur 1    einen Kompaktdampfreformer mit angeschlossener Brennstoffzelle in schematischer Darstellung,

Figur 2    das Temperaturprofil der Prozessgase als Diagramm,

Figur 3    das Temperaturprofil der Heizgase als Diagramm und

Figur 4    den Kompaktdampfreformer in schematischem Längsschnitt mit Zuordnung seiner Arbeitszonen zu den Diagrammen nach Figur 2 und 3.

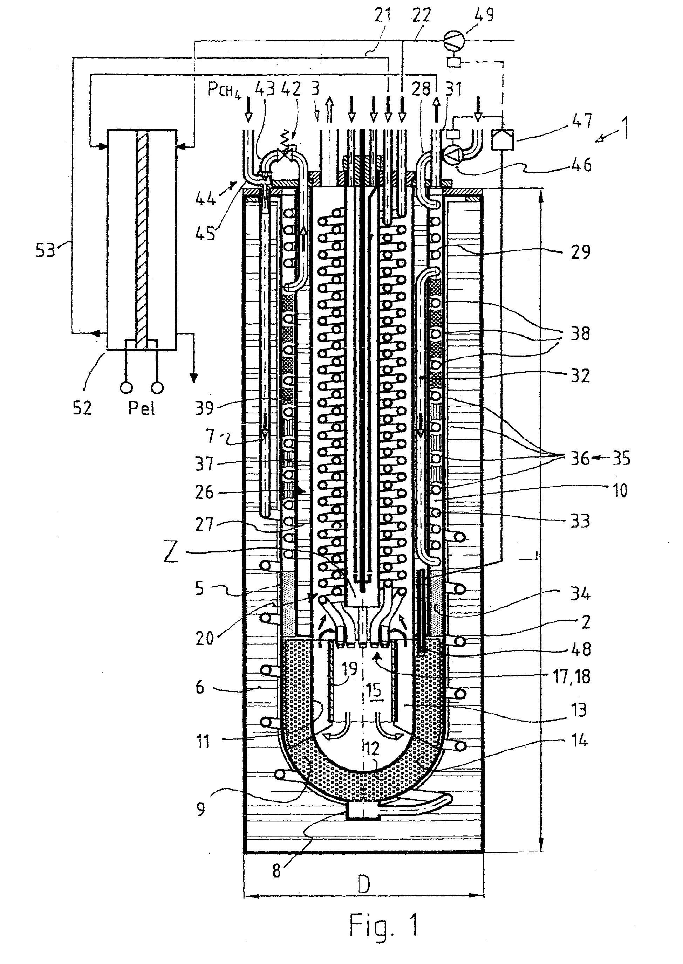

In Figur 1 ist ein Dampfreformer 1 in längs geschnittener, schematisierter Darstellung veranschaulicht. Er weist einen äußeren Mantel 2 der Länge L mit Kreisquerschnitt des Durchmessers D auf. Er kann zylindrisch oder auch in mehreren Zylindern abgestuft sein. Sämtliche Anschlüsse 3 sind vorzugsweise durch seinen oberen Abschluss 4 geführt.

Innerhalb des Mantels 2 ist konzentrisch und mit Abstand zu diesem ein unten abgeschlossenes Reformerrohr 5 angeordnet. Der zwischen dem Mantel 2 und dem Reformerrohr 5 vorhandene ringförmige Zwischenraum ist mit einem Isoliermaterial 6 zur thermischen Isolierung gefüllt. Eine Zuführleitung 7 für ein Gemisch aus Brennstoff und Dampf führt von dem oberen Abschluss 4 zunächst gerade und weiter unten in Windungen durch das Isoliermaterial 6 zu einem Speiseanschluss 8 an dem unteren Ende des Reformerrohrs. Dessen unterer becherförmiger Abschluss bildet den äußeren Mantel eines Reaktors 9 zur Durchführung des eigentlichen Reformierungsprozesses. Der Reaktor 9 ist nach innen hin durch ein inneres Reformerrohr 11 begrenzt, das unten becherförmig abgeschlossen und oben an dem Abschluss 4 gehalten ist. In dem becherförmigen Ringraum zwischen dem unteren Ende des inneren Reformerrohrs 11 und dem unteren Ende des äußeren Reformerrohrs 5 ist ein Katalysator 12 für den Reformingprozess angeordnet. Das Reformerrohr 11 ist vorzugsweise sowohl innen als auch außen jeweils mit Rippen 13, 14 versehen, die der Wärmeübertragung zwischen dem Katalysator 12 und einer von dem Reformerrohr 11 umschlossenen Brennkammer 15 dienen. Dieser ist ein Brenner 16 zugeordnet, der der Beheizung des Katalysators 12 dient und dazu eingerichtet ist, in der Brennkammer 15 eine flammenlose Oxidation des eingeleiteten Brennstoffs zu bewirken. Dazu sind eine Reihe von Gas- und Luftdüsen 17, 18 vorgesehen, die gleichsinnig ausgerichtet auf einem Kranz angeordnet sind und eine großräumige Zirkulation erzeugen. Ein zu dem Düsenkranz konzentrisch angeordneter hohlzylindrischer Leitkörper 19 kann die in Figur 1 durch Pfeile angedeutete großräumige Zirkulationsströmung unterstützen.

Sowohl die Gasdüsen 17 als auch die Luftdüsen 18 werden über eine Vorwärmeinrichtung 20 gespeist, die Abgaswärme nutzt. Zu dieser gehören Leitungen 21, 22, die als Schlangen durch einen innerhalb des oberen Teils des Reformerrohrs 11 ausgebildeten Abgaskanal 23 geführt sind. Somit werden sowohl das der Brennkammer 15 zugeführte Brenngas als auch die zugeführte Luft vorgewärmt. Es wird ein hoher Rekuperationsgrad und somit ein kühles Abgas erreicht. Vorzugsweise ist $(1-\Delta T_2/\Delta T_1) > 0{,}8$, wobei $\Delta T_1$ - die Abgastemperaturdifferenz zwischen Ein- und Ausgang des Abgaskanals 23 der Vorwärmeinrichtung 20 und $\Delta T_2$ die Differenz zwischen Abgastemperatur an dem Ausgang und Frischlufttemperatur an dem Ausgang ist. $(1-\Delta T_2/\Delta T_1)$ ist zumindest größer als 0,5.

Zentral kann ein Zündbrenner Z oder eine Elektroheizung vorgesehen sein, der der Vorwärmung der Brennkammer 15 bis zum Einsetzen der flammenlosen Oxidation dient.

Der insoweit beschriebene Dampfreformer 1 beinhaltet einen Dampferzeuger 24, der in dem Ringraum 10 zwischen dem äußeren Rekuperatorrohr 5 und dem inneren Rekuperatorrohr 11 angeordnet und mit diesem wärmetechnisch gekoppelt ist. Der Dampferzeuger 24 wird vorzugsweise durch eine Rohrschlange gebildet, die in mehrere Abschnitte unterteilt ist und konzentrisch zu der Vorwärmeinrichtung angeordnet ist. Dazwischen ist ein Rohr 25 angeordnet, das mit dem inneren Reformerrohr 11 einen weiteren Ringraum 26 umschließt. Dieser ist mit Isoliermaterial 27 zur thermischen Isolation des Abgaskanals 23 von dem Reformatkanal gefüllt, der zwischen dem äußeren Reformerrohr 5 und dem Rohr 25 durch den Ringraum 10 ausgebildet ist.

Der Dampferzeuger 24 weist einen Speisewasseranschluss 28 auf, von dem ausgehend ein erster Rohrschlangenabschnitt 29 durch den Reformatkanal führt, der an einem Reformatausgang 31 mündet. Der Rohrschlangenabschnitt 29 bildet einen im Gegenstrom arbeitenden Wasser/Reformat-Gegenstromkühler.

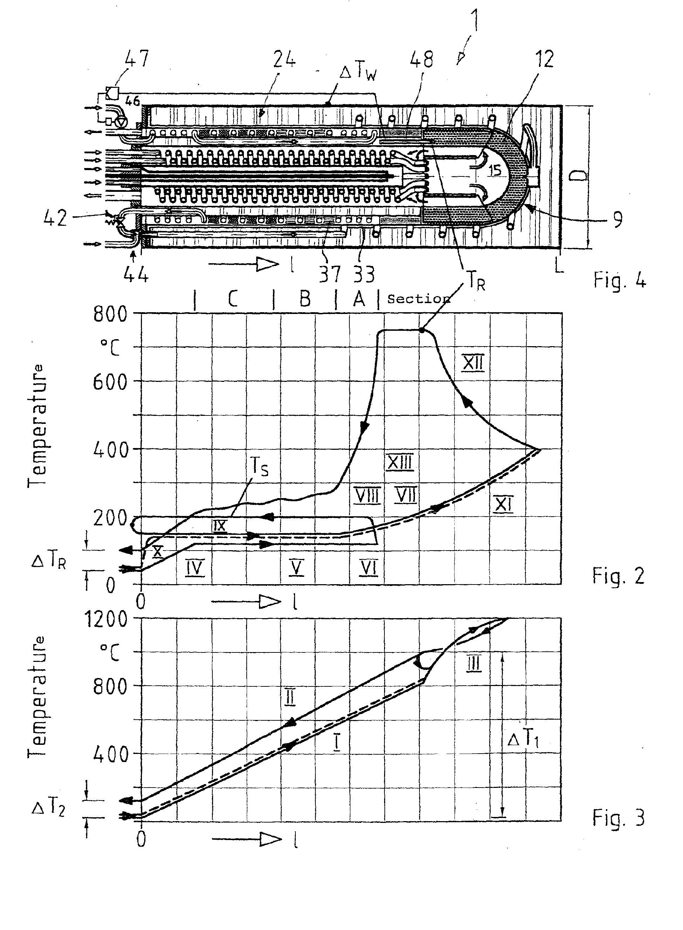

Die Rohrschlange 29 führt dann zu einem Überbrückungsrohr 32, das in Axialrichtung durch den Zwischenraum 26 führt. Es wechselt dann wieder in den äußeren Ringraum 10, der den Reformatkanal bildet und setzt sich dort als Rohrschlangenabschnitt 33 fort. Dieser bildet einen Wasser-Erhitzer und zugleich einen Reformat-Schockkühler (Quench-Cooler, Abschnitt A in Figur 3 und 5). Zwischen dem Rohrschlangenabschnitt 33 und dem Katalysator 12 ist ein gasdurchlässiger ringförmiger Isolierkörper 34 angeordnet, der eine Überhitzung des Dampferzeugers 24 bei Nulllast, d.h. bei Speisewasserdurchströmung von Null oder nahe Null unterbindet.

An den Rohrschlangenabschnitt 33 schließt sich ein weiterer Rohrschlangenabschnitt 35 an, der aus mehreren Windungen 36, 38 besteht (Abschnitt B in Figur 3 und 5). Diese Windungen 36, 38 sind in einen Katalysator eingebettet, der auch Windungszwischenräume ausfüllt und einen Nach-Reaktor bildet. Die ersten Windungen 36 sind dabei z.B. in einen CO-Shiftkatalysator 37 eingebettet. Die folgenden Windungen 38 (Abschnitt C in Figur 3 und 5) sind im vorliegenden Ausführungsbeispiel in einen Methanisierungskatalysator 39 eingebettet. Die Katalysatoren 37, 39 können auf einem geeigneten Katalysatorkörper, wie beispielsweise einem Drahtgestrick oder dergleichen oder auch als lose Schüttung in den Zwischenraum zwischen den Windungen 36, 38 eingebracht sein oder direkt auf den Rippen eines Verdampfers, der als Rippenrohr ausgebildet ist.

Damit untergliedert sich der Verdampfer 24 in drei Abschnitte A, B, C, nämlich den Rohrschlangenabschnitt 33 zur wenigstens teilweisen Verdampfung des Wassers und Schockkühlung des Reformats sowie die durch die Windungen 36 und 38 gebildeten Abschnitte, in denen durch Wärmeaustausch mit den jeweiligen Katalysatoren 37, 39 die weitere, weitgehend restlose Verdampfung des Wassers bewirkt wird. Die Katalysatoren 37, 39 bilden den zweistufigen Nach-Reaktor.

Der Ausgang des Verdampfers ist über eine Steigrohr 41 an ein Druckreglerventil 42 angeschlossen, das den Druck in dem Verdampfer 24 unabhängig von dessen Durchströmung konstant hält. Der von dem Druckreglerventil 42 abgegebene Dampf wird dem Treibdüsenanschluss 43 einer Strahlpumpe 44 zugeleitet, deren Sauganschluss 45 an eine Brennstoffzuleitung angeschlossen ist. Ihr Ausgang speist die Zuführleitung 7 mit einem Gemisch aus Dampf und Brennstoff.

Der Speisewasseranschluss 28 wird von einer Speisewasserpumpe 46 mit Speisewasser versorgt. Diese ist von einer Steuereinrichtung 47 anhand der über einen Temperaturfühler 48 erfassten Temperatur des Katalysators 12 so gesteuert oder geregelt, dass die Temperatur des Katalysators 12 konstant gehalten wird. Da der Luftbedarf für den Brenner und die Brennstoffzelle proportional der Energiezufuhr PCH4 und damit der Speisewassermenge ist, kann der Stellgrad des Luftgebläses 49 in einfacher Weise dem Stellgrad der Speisewasserpumpe 46 nachgeführt werden, der vom Regler 47 vorgegeben wird.

Die Luft und das Brenngas werden über die Leitungen 21, 22 zugeführt. Als Brenngas kann Anodenrestgas einer Brennstoffzelle dienen.

Das Reformat wird einem Anoden-Eingang einer Brennstoffzelle 52 zugeführt. Entstehendes Anodenrestgas wird über eine Leitung 53 der Vorwärmeinrichtung 20 zugeführt. Das Gebläse 49 fördert Luft zu der Katode der Brennstoffzelle und zu der Vorwärmeinrichtung 20.

Der Nach-Reaktor 37, 39, 39a kann einen Shiftkatalysator 37 und/oder einen Methanisierungskatalysator 39 und/oder einen Nachoxidationskatalysator 39a enthalten.

An den Rohrverdampfer 24 kann eingangsseitig und an den Nach-Reaktor 37, 39, 39a ausgangsseitig ein Wasser/Reformat-Gegenstromkühler 29 angeschlossen sein.

Der Druckregler 42 kann auf einen solchen Druck eingestellt sein, dass die Verdampfungstemperatur des Wassers in dem Rohrverdampfer 24 auf einen Wert zwischen 130°C und 280°C festgelegt ist.

Der Stoffstrom in dem Rohrverdampfer 24 kann in dem Bereich, der mit dem Nach-Reaktor 37, 39, 39a in thermischer Verbindung steht, eine flüssige Phase enthalten.

Der Temperaturfühler 48 kann ein Gebläse 49 zur Versorgung des Brenners 16 mit Verbrennungsluft steuern.

Der Nach-Reaktor 37, 39, 39a und der Rohrverdampfer 24 können im Gleichstrom von Reformat und Wasser durchströmt sein.

Der insoweit beschriebene Dampfreformer arbeitet wie folgt:

Es wird auf die Figuren 2 bis 4 verwiesen. Figur veranschaulicht hier mit einem ersten Kurvenast I die Temperatur der über die Leitungen 21, 22 zugeführten Gase, nämlich Luft und Brenngas. Der Kurvenast II veranschaulicht die Abgastemperatur des im Gegenstrom heraus geleiteten Abgases. Die dargestellten Temperaturen geben das Temperaturprofil in dem in Figur 4 veranschaulichten Dampfreformer 1, insbesondere in dessen Rekuperator, wieder. Der schleifenförmige Kurvenast III gibt in Figur 3 die Temperatur in der Brennkammer 15 bei Ablauf der flammenlosen Oxidation wieder. Wie veranschaulicht absolviert das Gas in der Brennkammer 15 mehrere Umläufe. Wie ersichtlich, kann bei einer Abgastemperatur von beispielsweise ca. 150°C eine Luft- und Gasvorwärmung bis auf etwa 800°C erreicht werden.

Die Kurve in Figur 2 gibt das Temperaturprofil des zu reformierenden und reformierten Gases wieder. Der Kurvenast IV kennzeichnet die Erwärmung des Speisewassers in dem Rohrschlangenabschnitt 29, der zugleich ein Speisewasservorwärmer und ein Wasserreformat-Gegenstromkühler ist. Mit einer Temperatur von etwas über 100°C wird nun das unter Druck stehende, vorgewärmte Speisewasser dem Verdampfer 24 zugeführt. Dies wird zunächst durch den unteren horizontalen Kurvenast V symbolisiert. Bei einem Punkt VI tritt das vorgewärmte Speisewasser in den Verdampfer ein. Es wird in dem Rohrschlangenabschnitt 33 auf Verdampfungstemperatur gebracht (Kurve VII) und durchläuft dann den gesamten Verdampfer 24, in dem es nach und nach verdampft. Dabei behält es seine Verdampfungstemperatur von z.B. 200°C bei, wie durch den horizontalen Kurvenast VIII veranschaulicht ist. Der Rohrverdampfer 24 stellt wie ein Wärmerohr eine einheitliche Temperatur für den Nach-Reaktor her. Es wird die Verdampfertemperatur $T_S$ nicht überschritten. Die Höhe der Verdampfertemperatur wird durch den Verdampferdruck an dem Druckregler 42 eingestellt.

Das Temperaturprofil gemäß Figur 2 wird auch bei Lastwechsel, insbesondere in der letzten Stufe in engen Grenzen eingehalten. So wird die Selektivität der Nachreaktion erhalten. Die Temperatureinstellung in der letzten Nachreaktorstufe wird hier nur durch die Druckregelung bewirkt.

Aus dem Verdampfer 24 gelangt der erzeugte Dampf zu der Strahlpumpe 44. Diese legt mit ihrem Verhältnis zwischen Treibdüsendurchmesser und Mischdüsendurchmesser das Dampf/Brennstoff-Verhältnis fest. Über ihren Sauganschluss 45 saugt die Strahlpumpe 44 die gewünschte Brennstoffmenge an und vermischt dieses mit dem Dampf. Dabei sinkt die Dampftemperatur (Figur 2, Kurvenast XI) zunächst etwas ab, wobei die Temperatur des beigemischten Brenngases sprunghaft ansteigt (Kurvenast X). Die Temperatur steigt dann bis zum Erreichen des Speiseanschlusses 8 allmählich an (Kurvenast XI). In dem Katalysator 12 nimmt die Temperatur gemäß Kurvenast XII weiter zu, bis sie die von dem Temperaturfühler 48 erfasste und durch Dosierung der Speisewasserzufuhr konstant ausgeregelte Temperatur $T_R$ erreicht. Mit dieser Temperatur verlässt das von dem Katalysator 12 erzeugte Reformat den Reaktor 9. Beim Auftreffen auf den ersten Abschnitt des Verdampfers 24 (Rohrschlangenabschnitt 33) wird das Reformat schockgekühlt (Figur 2, Kurvenast XI-II), als Abschnitt A.

Danach trifft das gekühlte Reformat auf die Katalysatoren 37 und 39. Hier findet eine Nachreaktion zur CO-Umwandlung statt. Die präzise Temperaturführung verhindert eine zu starke Methanisierung, insbesondere der vorhandenen $CO_2$-Anteile.

Der insoweit beschriebene Dampfreformer 1 arbeitet eigenstabil. Erhöhte Abnahme elektrischer Leistung $P_{el}$ verschlechtert den Heizwert des Anodenrestgases. Sinkt somit die Temperatur an dem Temperaturfühler 48 erhöht die Regeleinrichtung die Speisewasserförderung und somit die Dampferzeugung und die Reformaterzeugung. Die sich einstellende Erhöhung des Anodenrestgasanfalls erhöht die Brennerleistung in der Brennkammer 15. Somit führt der Dampfreformer 1 eine automatische Lastanpassung durch.

Ein praktisch ausgeführter Dampfreformer 1 hat die folgenden Kennwerte erreicht:

$$\eta_R = \frac{100(VxHu)_{Wasserstoff}}{(VxHu)_{Prozessgas} + (VxHu)_{Heizgas}} \quad \text{in } \%$$

V [m³/h]        - Volumenstrom im Normzustand
Hu [kWh/m³]        - Heizwert

Wirkungsgrad der Umwandlung in Wasserstoff bei Beheizung des Reformers mit Anodenrestgas:

$$\eta_H = \frac{100(VxHu)_{Wasserstoff*}}{(VxHu)_{Prozessgas}} \quad \text{in } \%$$

* in der Brennstoffzelle umgesetzter Wasserstoff (typisch 75%).

Beispiel für den neuen Reformer:

- Außenabmessungen: L = 0,6 m; D = 0,3 m
- Prozessgas: 1 m³/h Erdgas mit Heizwert 10 kWh/m³
- Wasser: 2,5 kg/h mit 15 bar (= 3 m³/h Dampf, S/C = 3)
- Heizgas: 0,41 m³/h Erdgas mit Heizwert 10 kWh/m³
- Reformat: 4 m³/h $H_2$ mit einem Heizwert von 3 kWh/m³
- Wirkungsgrad $\eta_R$ = 85 %

Bei Beheizung mit Anodenrestgas: (25 % des $H_2$ aus dem Reformat zzgl. des bei der Methanisierung gebildeten $CH_4$)

- verfügbarer Wasserstoff: 2,7 m³/h mit Heizwert 3 kWh/m³
- Wirkungsgrad $\eta_H$ = 81 %

Die beeinflussbaren Verluste des Reformers sind jeweils proportional $\Delta T_W$ ($\Delta T_W$ ist die Differenz der Wand-

zur Umgebungstemperatur), $\Delta T_2$ und $\Delta T_R$ (siehe Figur 2). Außerdem hängen sie vom Dampfüberschuss im Reformat ab, der für die rußfreie Reformierung und die Shiftreaktion notwendig ist.

Der neue Kompaktdampfreformer 1 umfasst in einem einzigen Gerät die Dampfreformierung von Erdgas oder anderen Brennstoffen einschließlich CO-Nachreinigung. Die kontrollierte katalytische CO-Reinigung wird durch sorgfältige Temperaturkontrolle an dem Nachreaktor 37, 39, 39a erreicht. Die Temperaturkontrolle wird durch druckgeregelten Betrieb des Verdampfers 24 ermöglicht.

**Patentansprüche**

1. Verfahren zur Dampfreformierung von Brennstoffen mittels eines Dampfreformers, der:

   - einen Verdampfer (24) zur Erzeugung von unter Druck stehendem $H_2O$-Dampf und
   - eine an den Verdampfer (24) angeschlossene Strahlpumpe (44) aufweist,
   - wobei der Strahlpumpe (44) der in dem Verdampfer (24) erzeugte Dampf als Treibmittel zugeführt wird,
   - wodurch durch Beisaugung von Brennstoff ein $H_2O$-Dampf/Brennstoff-Gemisch zur Speisung eines Reaktors (9) erzeugt wird.

2. Verfahren nach Anspruch 1, **dadurch gekennzeichnet, dass** der Verdampfer (24) durch thermischen Kontakt mit einem Nach-Reaktor (37, 39, 39a), der zur weitgehenden Beseitigung von Kohlenmonoxidanteilen des erzeugten Reformats dient, beheizt wird.

3. Verfahren nach Anspruch 1, **dadurch gekennzeichnet, dass** der Betrieb des Verdampfers (24) durch eine Druckregelung desselben erfolgt.

4. Verfahren nach Anspruch 13, **dadurch gekennzeichnet, dass** bei dem Betrieb des Verdampfers (24) der Verdampferdruck konstant gehalten wird.

5. Verfahren nach Anspruch 1, **dadurch gekennzeichnet, dass** die Leistungsregelung des Verdampfers (24) durch Regulierung der Speisewassermenge erfolgt, mit der der Verdampfer (24) gespeist wird.

6. Kompakt-Dampfreformer zur Dampfreformierung von Brennstoffen, der:

   - einen Verdampfer (24) zur Erzeugung von unter Druck stehendem $H_2O$-Dampf und
   - eine an den Verdampfer (24) angeschlossene Strahlpumpe (44) aufweist,
   - wobei der Strahlpumpe (44) der in dem Verdampfer (24) erzeugte Dampf als Treibmittel zugeführt wird,
   - wodurch durch Beisaugung von Brennstoff ein $H_2O$-Dampf/Brennstoff-Gemisch zur Speisung eines Reaktors (9) erzeugt wird.

7. Kompakt-Dampfreformer (1) nach Anspruch 6, **gekennzeichnet durch**:

   einen Brenner (16),
   einen Reaktor (9), der von dem Brenner (15) beheizt ist und der Erzeugung von Reformat aus Brennstoff und $H_2O$-Dampf dient,
   eine Vorwärmeinrichtung (20) zur Vorwärmung von zugeführter Luft und/oder von zugeführtem Brennstoff unter Rückgewinnung von Abgaswärme, die an den Brenner (16) angeschlossen ist und deren Wärmerückgewinnungsquotient ($\Delta T_1/\Delta T_2$) größer ist als 0,5,
   einen Nach-Reaktor (37, 39, 39a), der zur Durchführung einer Shift-Reaktion, einer Nachoxidation und/oder einer Methanisierung der im Rohreformat enthaltenen Kohlenmonoxidanteile eingerichtet ist,

   wobei der Nach-Reaktor (37, 39, 39a) mit einem Rohrverdampfer (24) in wärmeaustauschender Verbindung steht, der zur Erzeugung von unter Druck stehendem $H_2O$-Dampf dient und der die Temperatur des Nach-Reaktors kontrolliert auf einem festgelegten Niveau hält.

8. Kompakt-Dampfreformer nach Anspruch 6, **dadurch gekennzeichnet, dass** er einen Ringraum (10) aufweist, der die Vorwärmeinrichtung (20) umgibt, von Reformat durchströmt und nach außen thermisch isoliert ist und dass der Nach-Reaktor (37, 39, 39a) zur weitgehenden Beseitigung von Kohlenmonoxidanteilen des erzeugten Reformats ebenfalls in dem Ringraum (10) angeordnet ist und mit dem Wasser durchströmten Rohrverdampfer (24) in thermischer Verbindung steht.

9. Kompakt-Dampfreformer nach Anspruch 6, **dadurch gekennzeichnet, dass** an den Rohrverdampfer (24) eingangsseitig und an den Nach-Reaktor (37, 39, 39a) ausgangsseitig ein Wasser/Reformat-Gegenstromkühler (29) angeschlossen ist.

10. Kompakt-Dampfreformer nach Anspruch 6, **dadurch gekennzeichnet, dass** der Rohrverdampfer (24) als druckfestes Rippenrohr ausgebildet ist.

11. Kompakt-Dampfreformer nach Anspruch 6, **dadurch gekennzeichnet, dass** an den Rohrverdampfer (24) ausgangsseitig ein Druckregler (42) angeschlossen ist.

12. Kompakt-Dampfreformer nach Anspruch 6, **dadurch gekennzeichnet, dass** an den Rohrverdampfer (24) eine Strahlpumpe (44) angeschlossen ist, die der Beisaugung von Brennstoff und der Erzeugung eines $H_2O$-Dampf/ Brennstoff-Gemischs zur Speisung des Reaktors (9) dient.

13. Kompakt-Dampfreformer nach Anspruch 12, **dadurch gekennzeichnet, dass** die Strahlpumpe (42) eine ungeregelte Strahlpumpe ist.

14. Kompakt-Dampfreformer nach Anspruch 6, **dadurch gekennzeichnet, dass** der Reaktor (9) mit einem Temperaturfühler (48) in Verbindung steht, der zur Beeinflussung der Speisewasserzufuhr zu dem Rohrverdampfer (24) in der Weise dient, dass bei sinkender Temperatur die Speisewasserförderung erhöht wird und umgekehrt.

15. Kompakt-Dampfreformer nach Anspruch 6, **dadurch gekennzeichnet, dass** der Brenner (16) zumindest teilweise mit Anodenrestgas einer angeschlossenen Brennstoffzelle (52) gespeist ist.

Fig. 1

Fig. 4

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10119083 A1
- WO 02085781 A
- EP 1031374 A2